# EUROPEAN PATENT APPLICATION

(11) **EP 2 472 598 A1**
(43) Date of publication of application: **04.07.2012**
(21) Application number: 10811801.9
(22) Date of filing: 23.08.2010
(51) Int. Cl.: H01L 31/042, H02G 3/08

(54) **SOLAR CELL MODULE AND METHOD FOR MANUFACTURING SAME**

(30) Priority: 25.08.2009 JP 2009194173
(71) Applicant: Sanyo Electric Co., Ltd., Osaka 570-8677 (JP)
(72) Inventor: KOUYANAGI, Masao, Moriguchi-shi Osaka 570-8677 (JP)
(74) Representative: Calderbank, Thomas Roger
(86) International application number: PCT/JP2010/064171
(87) International publication number: WO 2011/024751

(57) **Abstract**

Disclosed is a solar cell module wherein deterioration of the strength of adhering between a terminal box and an adhesive can be suppressed, while facilitating an adhering step. The solar cell module (1) is provided with the terminal box (3) which is adhered to a solar cell panel (2) with the adhesive (4) therebetween. The terminal box includes an adhesive opening (313), and the adhesive opening has a neck portion (313c) having a width narrower than that of the lower open end (313a) and/or that of the upper open end (313b), and the adhesive opening is filled with the adhesive.

## Description

### Technical Field

The present invention relates to a solar cell module and a method for manufacturing the same, and more particularly, it relates to a solar cell module including a solar cell panel and a terminal box and a method for manufacturing the same.

### Background Technique

A solar cell module including a solar cell panel and a terminal box is known in general. Such a solar cell module is disclosed in Japanese Patent Laying-Open No. 2007-311665, for example.

The aforementioned Japanese Patent Laying-Open No. 2007-311665 discloses a structure obtained by providing a flange-shaped adhering portion provided on a terminal box with a through-hole (adhesive opening) passing through the adhering portion from the upper surface to the lower surface. In this Japanese Patent Laying-Open No. 2007-311665, an adhesive is injected and filled into the through-hole in a state of aligning the lower surface of the adhering portion of the terminal box and a solar cell panel with each other thereby adhering the terminal box and the solar cell panel to each other with the adhesive filled into the through-hole. Thus, it is possible to more simplify the adhering step than a case of sticking and adhering the solar cell panel and the terminal box to each other in a state of applying the adhesive to the lower surface of the terminal box. In the aforementioned Japanese Patent Laying-Open No. 2007-311665, the hole width of the through-hole is equal from an open end of an adhering surface up to an open end on the back of the adhering surface.

### Prior Art

### Patent Document

Patent Document 1: Japanese Patent Laying-Open No. 2007-311665

### Summary of the Invention

### Problem to be Solved by the Invention

In the aforementioned Japanese Patent Laying-Open No. 2007-311665, however, the hole width of the through-hole (adhesive opening) is equal from the lower surface up to the upper surface of the adhering portion, and hence contact areas of the inner side surface (terminal box) of the through-hole and the adhesive are reduced. Therefore, there is such a problem that adhesive strength between the terminal box and the adhesive is reduced.

The present invention has been proposed in order to solve the aforementioned problem, and an object of the present invention is to provide a solar cell module capable of suppressing reduction of adhesive strength between a terminal box and an adhesive while simplifying an adhering step and a method for manufacturing the same.

### Means for Solving the Problem

In order to attain the aforementioned object, a solar cell module according to a first aspect of the present invention includes a solar cell panel including a solar cell and a terminal box, adhered to the solar cell panel through an adhesive, for collecting electricity generated in the solar cell panel, while the terminal box includes an adhesive opening passing through a box body portion, the adhesive opening has a neck portion whose width is smaller than at least either a lower open end or an upper open end of the adhesive opening, and the adhesive is filled into the adhesive opening.

A method for manufacturing a solar cell module according to a second aspect of the present invention includes the steps of preparing a solar cell panel including a solar cell, preparing a terminal box, including an adhesive opening passing through a box body portion and having a neck portion whose width is smaller than at least either a lower open end or an upper open end, for collecting electricity generated in the solar cell panel and adhering the solar cell panel and the terminal box to each other with an adhesive by injecting and filling the adhesive into the adhesive opening from the upper open end of the adhesive opening in a state of bringing the side of the lower surface of the terminal box into contact with the surface of the solar cell panel.

### Effect of the Invention

According to the present invention, reduction of adhesive strength between a terminal box and a solar cell panel can be suppressed while simplifying an adhering step.

### Brief Description of the Drawings

[Fig. 1] A perspective view showing the overall structure of a solar cell module according to a first embodiment of the present invention.
[Fig. 2] A top plan view showing the solar cell module according to the first embodiment shown in Fig. 1.
[Fig. 3] A bottom view (bottom plan view) showing the solar cell module according to the first embodiment shown in Fig. 1.
[Fig. 4] A schematic sectional view of the solar cell module according to the first embodiment shown in Fig. 1.
[Fig. 5] A perspective view of a terminal box of the solar cell module according to the first embodiment shown in Fig. 1 as viewed from the side of the lower surface.
[Fig. 6] A plan view showing a state of removing a lid member of the terminal box of the solar cell module according to the first embodiment shown in Fig. 1.
[Fig. 7] A sectional view taken along the line 50-50 in Fig. 6.
[Fig. 8] A sectional view taken along the line 51-51 in Fig. 6.
[Fig. 9] An enlarged sectional view showing an adhesive and a portion in the vicinity thereof in Fig. 7.
[Fig. 10] A sectional view showing an adhesive opening of the terminal box of the solar cell module according to the first embodiment of the present invention.
[Fig. 11] A plan view (bottom plan view) showing the lower surface of the terminal box of the solar cell module according to the first embodiment shown in Fig. 5.
[Fig. 12] A sectional view for illustrating an adhering step for the terminal box and a solar cell panel in a manufacturing process for the solar cell module according to the first embodiment of the present invention.
[Fig. 13] A sectional view for illustrating the adhering step for the terminal box and the solar cell panel in the manufacturing process for the solar cell module according to the first embodiment of the present invention.
[Fig. 14] An enlarged sectional view for illustrating the adhering step for the terminal box and the solar cell panel in the manufacturing process for the solar cell module according to the first embodiment of the present invention.
[Fig. 15] A perspective view of a terminal box of a solar cell module according to a second embodiment shown in Fig. 1 as viewed from the side of the lower surface.
[Fig. 16] A plan view showing a state of removing a lid member of the terminal box of the solar cell module according to the second embodiment shown in Fig. 15.
[Fig. 17] An enlarged plan view showing an opening and a lid portion in Fig. 16.
[Fig. 18] A sectional view taken along the line 52-52 in Fig. 16.
[Fig. 19] A sectional view taken along the line 53-53 in Fig. 17.
[Fig. 20] A sectional view taken along the line 54-54 in Fig. 17.
[Fig. 21] A plan view (bottom plan view) showing the lower surface of the terminal box of the solar cell module according to the second embodiment shown in Fig. 15.
[Fig. 22] An enlarged sectional view for illustrating an adhering step for the terminal box and a solar cell panel in a manufacturing process for the solar cell module according to the second embodiment of the present invention.
[Fig. 23] An enlarged sectional view for illustrating the adhering step for the terminal box and the solar cell panel in the manufacturing process for the solar cell module according to the second embodiment of the present invention.
[Fig. 24] A sectional view showing an adhesive opening according to a first modification of the first embodiment of the present invention.
[Fig. 25] A sectional view showing an adhesive opening according to a second modification of the first embodiment of the present invention.
[Fig. 26] A sectional view showing a solar cell module according to a third modification of the first embodiment of the present invention.
[Fig. 27] A sectional view showing a solar cell module according to a fourth modification of the first embodiment of the present invention.
[Fig. 28] A sectional view showing a solar cell module according to a modification of the second embodiment of the present invention.

### Modes for Carrying Out the Invention

Embodiments of the present invention are now described with reference to the drawings.

### (First Embodiment)

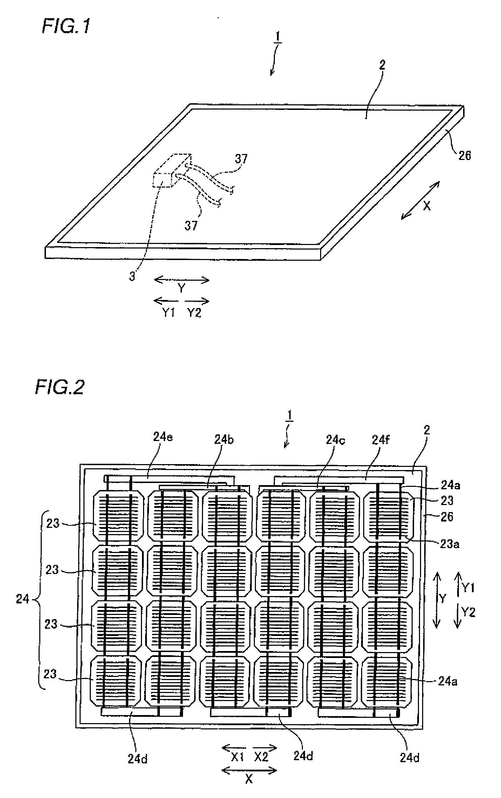

First, the structure of a solar cell module 1 according to a first embodiment of the present invention is described with reference to Figs. 1 to 11.

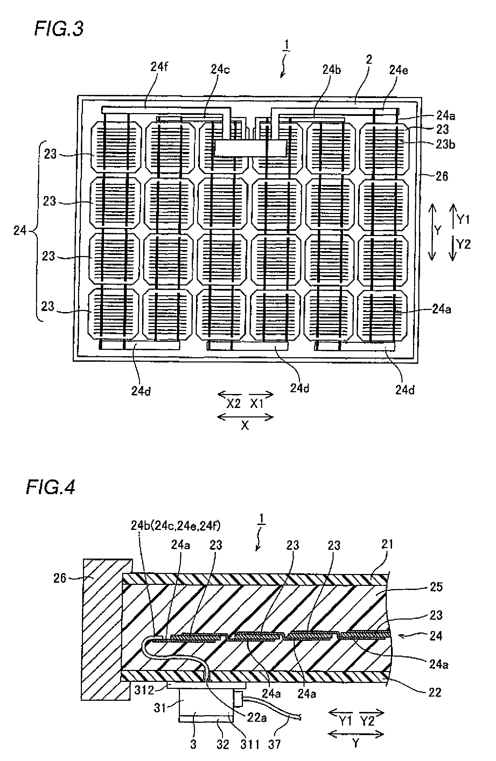

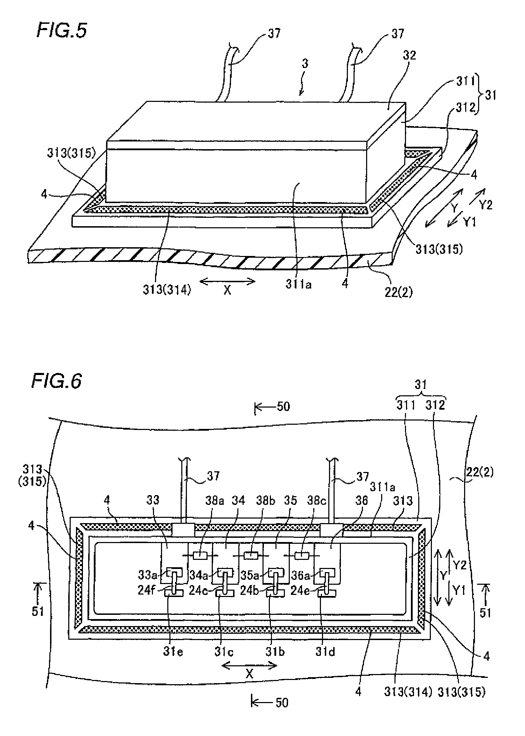

As shown in Fig. 1, the solar cell module 1 according to the first embodiment of the present invention includes a plate-type solar cell panel 2 and a terminal box 3 fixed to the side of the back surface (surface opposite to a photoreceiving surface) of the solar cell panel 2. The solar cell panel 2 is constituted of a surface-side cover 21 consisting of a transparent member of white tempered glass or the like, a weather-resistant back-side cover 22 consisting of a resin film of polyethylene terephthalate (PET) or the like, solar cell groups 24, arranged between the surface-side cover 21 and the back-side cover 22, each consisting of a plurality of solar cells 23 electrically connected in series with each other, a bonding material 25 provided between the surface-side cover 21 (back-side cover 22) and the solar cells 23 and a metal frame body 26 made of aluminum or the like, as shown in Fig. 4. The terminal box 3 is provided for collecting electricity generated in the solar cells 23 (solar cell groups 24) of the solar cell panel 2. The terminal box 3 is adhered onto the surface of the back-side cover 22 of the solar cell panel 2 through an adhesive 4 (see Figs. 5 to 9) to be fixed thereto.

As shown in Fig. 2, a plurality of finger electrodes 23a extending in a direction X are provided on the surface of each solar cell 23. As shown in Fig. 3, a plurality of finger electrodes 23b are provided on the back surface of each solar cell 23. The finger electrodes 23a of first solar cells 23 among the solar cells 23 adjacent to each other and the finger electrodes 23b of second solar cells 23 are electrically connected with each other by lead wires 24a consisting of copper wires or the like. The plurality of (in the first embodiment, four) solar cells 23 are connected in series with each other in a direction Y by the lead wires 24a, whereby each solar cell group 24 is constituted.

As shown in Figs. 2 and 3, a plurality of (in the first embodiment, six) solar cell groups 24 are provided. The plurality of solar cell groups 24 are arranged in parallel with each other in the direction X. Assuming that the column on an end portion in a direction of arrow X1 in Fig. 2 is the first column, the solar cells 23 arranged on end portions of the solar cell groups 24 of the second column and the third column on the side of a direction of arrow Y1 are electrically connected with each other by the lead wire 24a and an L-shaped connecting member 24b. The solar cells 23 arranged on end portions of the solar cell groups 24 of the fourth column and the fifth column on the side of the direction of arrow Y1 are electrically connected with each other by the lead wire 24a and an L-shaped connecting member 24c. The solar cells 23 arranged on end portions of the solar cell groups 24 of the first column and the second column on the side of a direction of arrow Y2, the solar cells 23 arranged on end portions of the solar cell groups 24 of the third column and the fourth column on the side of the direction of arrow Y2 and the solar cells 23 arranged on end portions of the solar cell groups 24 of the fifth column and the sixth column on the side of the direction of arrow Y2 are electrically connected with each other by the lead wires 24a and connecting members 24d respectively. Thus, the plurality of solar cell groups 24 are electrically connected in series with each other through the connecting members 24b, 24c and 24d. L-shaped connecting members 24e and 24f are connected to the solar cells 23 (solar cells 23 positioned on end portions of the solar cell groups 24 of the first column and the sixth column in the direction of arrow Y1) positioned on terminal ends among these solar cell groups 24 electrically connected in series with each other respectively. The connecting members 24b, 24c, 24d, 24e and 24f and the finger electrodes 23a or 23b of the solar cells 23 positioned on the end portions of the solar cell groups 24 in the direction Y are electrically connected with each other by the lead wires 24a respectively.

As shown in Fig. 4, the L-shaped connecting member 24b, the connecting member 24c, the connecting member 24e and the connecting member 24f are derived outward from the solar cell panel 2 through a notch 22a of the back-side cover 22 respectively. Forward end portions of the respective ones of these connecting members 24b, 24c, 24e and 24f are electrically connected with terminal blocks 33, 34, 35 and 36, described later, in the terminal box 3.

As shown in Figs. 5 and 6, the terminal box 3 includes a box-shaped body portion 31 made of resin, a lid member 32 made of resin, the four terminal blocks 33, 34, 35 and 36 (see Fig. 6) set in the body portion 31 and connected with the connecting members 24b, 24c, 24e and 24f respectively, and external connecting cables 37. The body portion 31 and the lid member 32 are rectangularly formed in plan view. The respective ones of the terminal blocks 33, 34, 35 and 36 have terminals 33a, 34a, 35a and 36a. The terminals 33a, 34a, 35a and 36a are connected to the external connecting cables 37 through the terminal blocks 33, 34, 35 and 36. The terminal blocks [the terminal block 33 and the terminal block 34, the terminal block 34 and the terminal block 35, and the terminal block 35 and the terminal block 36) adjacent to each other are connected with each other through bypass diodes 38a, 38b and 38c respectively. The body portion 31 is an example of the "box body portion" in the present invention.

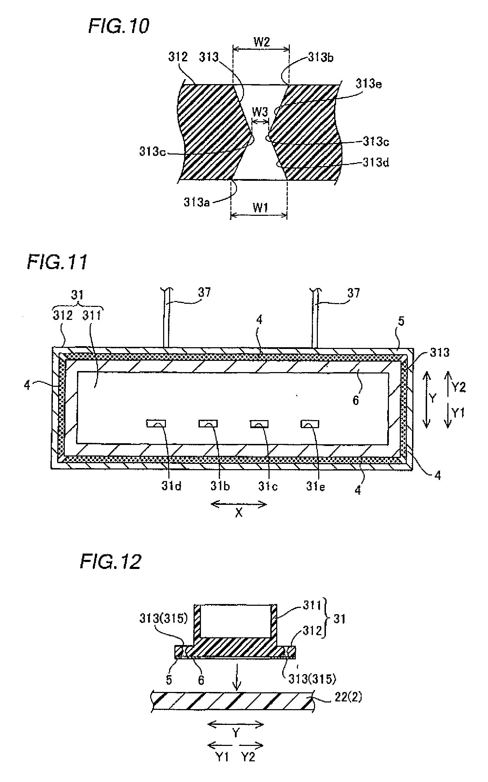

As shown in Figs. 6 and 11, four openings 31b, 31c, 31d and 31e conducting the outer portion (side of the solar cell panel 2) and the inner portion (side of the terminal blocks 33 to 36) of the body portion 31 are formed on the lower surface of the body portion 31 (lower surface of a box portion 311 described later). As shown in Fig. 6, the connecting members 24b, 24c, 24e and 24f are introduced from the outer portion into the inner portion of the body portion 31 through the openings 31b to 31e respectively.

As shown in Figs. 5 to 10, the body portion 31 made of resin includes the rectangular box portion 311 having four side surfaces and a flange portion 312 integrally molded with the box portion 311. The flange portion 312 protrudes outward from end portions of the side surfaces of the box portion 311 closer to the solar cell panel 2 in plan view and has a rectangular outer peripheral portion. The flange portion 312 is provided with adhesive openings 313 passing through the same from the lower surface to the upper surface. The adhesive openings 313 are formed to extend along peripheral edge portions (side surfaces 311a) of the box portion 311. More specifically, the adhesive openings 313 consist of two openings 314 linearly extending in the direction X along the side surfaces of the box portion 311 extending in the direction X and two openings 315 linearly extending in the direction Y along the side surfaces of the box portion 311 extending in the direction Y. As the whole of the two openings 314 and the two openings 315, the adhesive openings 313 are arranged in a rectangular circumferential shape to surround the box portion 311.

According to the first embodiment, each of the adhesive openings 313 (openings 314 and 315) is provided with a neck portion 313c having a width W3 smaller than a width W1 of a lower open end 313a of the adhesive opening 313 and a width W2 of an upper open end 313b, as shown in Fig. 10. The neck portion 313c is formed over the total length of each of the openings 314 extending in the direction X and the openings 315 extending in the direction Y.

As shown in Fig. 10, an inner side surface 313d from the lower open end 313a of each of the openings 314 and 315 up to the neck portion 313c and another inner side surface 313e from the neck portion 313c up to the upper open end 313b are constituted of planar surfaces inclined by a prescribed angle. Thus, the width of each of the openings 314 and 315 gradually reduces from the lower open end 313a up to the neck portion 313c, and gradually reduces from the upper open end 313b up to the neck portion 313c.

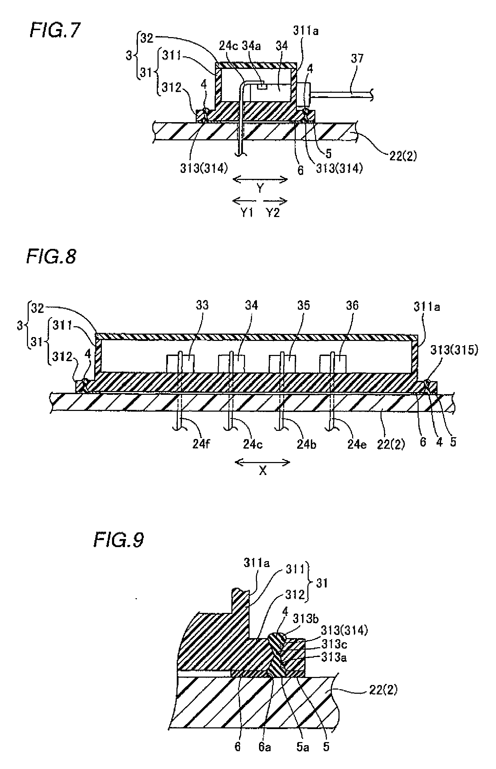

As shown in Figs. 7 to 9 and 11, a double-faced adhesive tape 5 is arranged on the lower surface of the flange portion 313 in a rectangular circumferential shape along the adhesive openings 313 on a region outside the adhesive openings 313 in plan view. The double-faced adhesive tape 5 is circumferentially arranged to surround all adhesive openings 313. Another double-faced adhesive tape 6 is arranged on the lower surfaces of the flange portion 312 and the box portion 311 in a rectangular circumferential shape along the adhesive openings 313 on a region inside the adhesive openings 313 in plan view. As shown in Figs. 7 to 9, the body portion 31 is adhered to the solar cell panel 2 by the double-faced adhesive tapes 5 and 6. The double-faced adhesive tapes 5 and 6 are examples of the "seal portion" in the present invention.

The adhesive 4 (illustrated in a halftone manner in Figs. 5, 6 and 11) consisting of silicone resin or epoxy resin is filled into a space constituted of the inner side surfaces (inner side surfaces 313d and 313e (see Fig. 10)) of the adhesive openings 313, an inner side surface 5a (see Fig. 9) of the double-faced adhesive tape 5, an outer side surface 6a (see Fig. 9) of the double-faced adhesive tape 6 and the surface of the solar cell panel 2. In particular, the adhesive 4 is filled into each adhesive opening 313 from the side of the solar cell panel 2 up to the side above the neck portion 313c beyond the neck portion 313c. The body portion 31 is adhered to the solar cell panel 2 also by the adhesive 4.

A method for manufacturing the solar cell module 1 according to the first embodiment of the present invention is now described with reference to Figs. 11 to 14.

First, the solar cell panel 2 constituted of the surface-side cover 21, the back-side cover 22, the solar cell groups 24 consisting of the solar cells 23, the *bonding material* 25 and the metal frame body 26 is prepared. The connecting members 24b, 24c, 24e and 24f are derived from the back-side cover 22 of this solar cell panel 2.

According to the first embodiment, the double-faced adhesive tapes 5 and 6 are first circumferentially stuck to the regions (see Fig. 11) inside and outside the adhesive openings 313 respectively, as shown in Fig. 12. In this state, the surface of the back-side cover 22 and the lower surface of the body portion 31 of the terminal box 3 are arranged to be opposed to each other. Then, the respective ones of the four connecting members 24b, 24c, 24e and 24f (see Fig. 6) are inserted into the openings 31b to 31e (see Fig. 6) formed on the lower surface of the body portion 31. Thereafter the body portion 31 and the solar cell panel 2 are pushed against each other, thereby temporarily fixing the terminal box 3 and the solar cell panel 2 to each other by the adhesive force of the double-faced adhesive tapes 5 and 6.

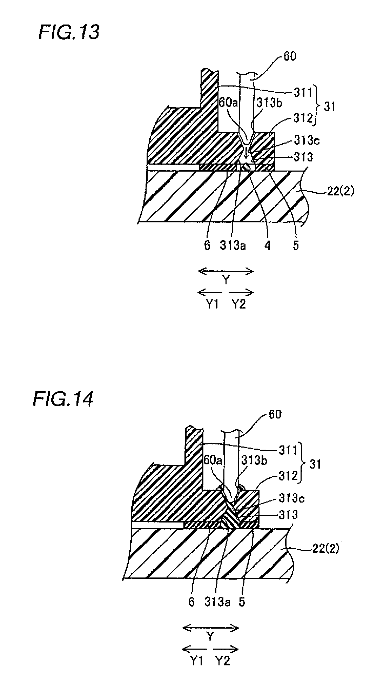

Thereafter the adhesive 4 is injected into each adhesive opening 313, as shown in Fig. 13. More specifically, the adhesive 4 is injected while inserting a forward end 60a of an adhesive nozzle 60 into a portion of each adhesive opening 313 above the neck portion 313c and moving the same along each of the openings 314 and 315. At this time, the adhesive 4 projects toward an upper-side portion (portion above the neck portion 313c) when the adhesive 4 is filled into a lower-side portion (portion below the neck portion 313c) of each of the openings 314 and 315 as shown in Fig. 14, whereby an operator can visually recognize that the adhesive 4 has been filled into the lower-side portion while performing the injecting operation from the upper side.

Thereafter the respective ones of the terminals 33a to 36a of the terminal blocks 33 to 36 of the terminal box 3 and forward end portions of the connecting members 24b, 24c, 24e and 24f introduced into the terminal box 3 are electrically connected with each other by soldering. After the lid member 32 is mounted on the body portion 31, the adhesive 4 is hardened by leaving the same for a prescribed period. Thus, the terminal box 3 and the solar cell panel 2 are fixed to each other, and the solar cell module 1 is completed.

According to the first embodiment, as hereinabove described, the terminal box 3 is provided with the flange portion 312 protruding outward from the box portion 311 in plan view and the adhesive openings 313, passing through the flange portion 312 from the lower surface up to the upper surface, each having the neck portion 313c whose width is smaller than the lower open end 313a and the upper open end 313b. The solar cell module 1 is so formed in this manner that the terminal box 3 and the solar cell panel 2 can be easily adhered to each other by injecting the adhesive 4 into the adhesive openings 313 from above in a state of bringing the side of the lower surface of the terminal box 3 into contact with the surface of the solar cell panel 3. Thus, the adhering step can be simplified as compared with a case of sticking and adhering the solar panel 2 and the terminal box 3 to each other in a state of applying the adhesive 4 to the lower surface of the terminal box 3. Further, the neck portion 313c whose width is smaller than the lower open end 313a or the upper open end 313b is so provided on each adhesive opening 313 that contact areas of the adhesive 4 filled into the adhesive opening 313 and the inner side surfaces of the adhesive opening 313 can be increased dissimilarly to a case of equalizing the width of each adhesive opening 313 from the lower open end up to the upper open end as in the prior art. Thus, the adhesive force between the adhesive 4 and the inner side surfaces (terminal box 3) of the adhesive openings 313 can be increased, whereby reduction of adhesive strength between the terminal box 3 and the solar cell panel 2 can be suppressed.

According to the first embodiment, as hereinabove described, the neck portion 313c is so formed that the width is smaller than both of the lower open end 313a and the upper open end 313b of each adhesive opening 313. When the solar cell module 1 is formed in this manner, the neck portion 313c enters a state of gnawing into the adhesive 4 filled into each adhesive opening 313 in the width direction, whereby the adhesive strength between the adhesive 4 and the neck portion 313c (terminal box 3) in the vertical direction can be improved. Further, the width of the neck portion 313c is so reduced that the adhesive 4 can be inhibited from projecting upward beyond the neck portion 313c before the adhesive 4 is filled into a space of each adhesive opening 313 below the neck portion 313c, whereby the adhesive 4 can be reliably filled into the space of the adhesive opening 313 below the neck portion 313c with no clearance. Thus, formation of clearances in the adhered portions can be suppressed, whereby moisture can be inhibited from infiltrating into the terminal box 3 through the adhered portions.

According to the first embodiment, as hereinabove described, each adhesive opening 313 is so formed that the width gradually reduces from the lower open end 313a and the upper open end 313b up to the neck portion 313c, whereby formation of clearance between the inner side surfaces (inner side surfaces 313d and 313e) of the adhesive openings 313 and the adhesive 4 can be suppressed. Thus, moisture can be inhibited from infiltrating into the terminal box 3 through the adhered portions.

According to the first embodiment, as hereinabove described, the adhesive openings 313 are formed to extend along the peripheral edge portions of the box portion 311 while the neck portion 313c is formed substantially over the total length of each adhesive opening 313. The solar cell module 1 is so formed in this manner that the adhesive force between the adhesive 4 and the inner side surfaces (terminal box 3) of each adhesive opening 313 can be increased over the total length of the adhesive opening 313 by the neck portion 313c formed substantially over the total length of the adhesive opening 313, whereby the adhesive strength between the solar cell panel 2 and the terminal box 3 can be improved.

According to the first embodiment, as hereinabove described, the adhesive openings 313 are circumferentially arranged along the peripheral edge portions of the box portion 311, whereby the adhesive strength between the solar cell panel 2 and the box portion 311 (terminal box 3) can be improved by the adhesive openings 313 circumferentially arranged to surround the box portion 311 and the neck portions 313c.

According to the first embodiment, as hereinabove described, the adhesive openings 313 are formed on the flange portion 312, whereby the injection operation of the adhesive 4 can be performed from outside the terminal box 3. Thus, workability can be improved.

According to the first embodiment, as hereinabove described, the terminal box 3 and the solar cell panel 2 are adhered to each other by the double-faced adhesive tapes 5 and 6 circumferentially arranged along the circumferential adhesive openings 313 on the regions inside and outside the adhesive openings 313 in plan view. The solar cell module 1 is so formed in this manner that the solar cell panel 2 and the terminal box 3 can be temporarily fixed to each other by the double-faced adhesive tapes 5 and 6 in the state of bringing the side of the lower surface of the terminal box 3 into contact with the surface of the solar cell panel 2. Thus, the adhesive 4 can be easily injected into the adhesive openings 313. Further, the interface between the terminal box 3 and the solar cell panel 2 can be adhered with the double-faced adhesive tapes 5 and 6, whereby the adhesive 4 injected into the adhesive openings 313 can be inhibited from spreading over the regions inside and outside the adhesive openings 313 on the interface between the terminal box 3 and the solar cell panel 2. Thus, the adhesive 4 can be inhibited from projecting outward from the terminal box 3 or entering the openings 31b, 31c, 31d and 31e. The adhesive 4 is so inhibited from projecting from the terminal box 3 that a time necessary for an operation of removing a projecting adhesive 4 can be eliminated or shortened.

### (Second Embodiment)

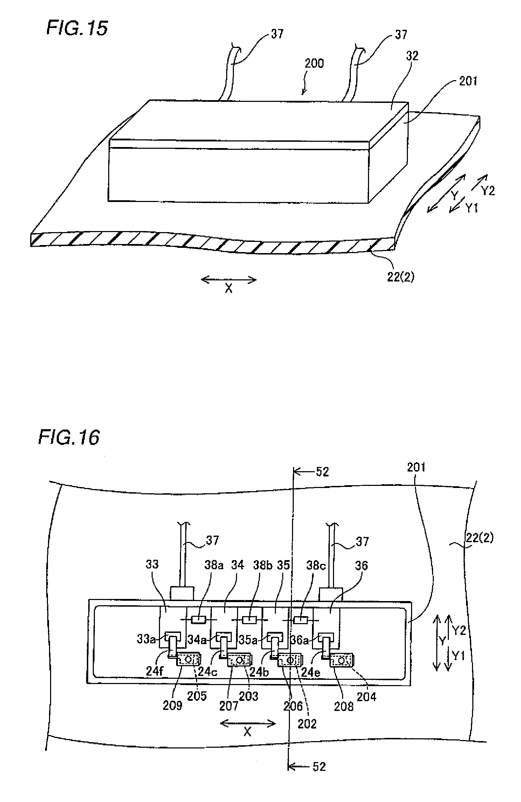

A solar cell module according to a second embodiment of the present invention is now described with reference to Figs. 15 to 21. In this second embodiment, an example of injecting an adhesive 4 from inside a terminal box 200 through an adhesive opening 206c is described, dissimilarly to the aforementioned first embodiment injecting the adhesive 4 through the adhesive openings 313 provided on the flange portion 312 outside the terminal box 3.

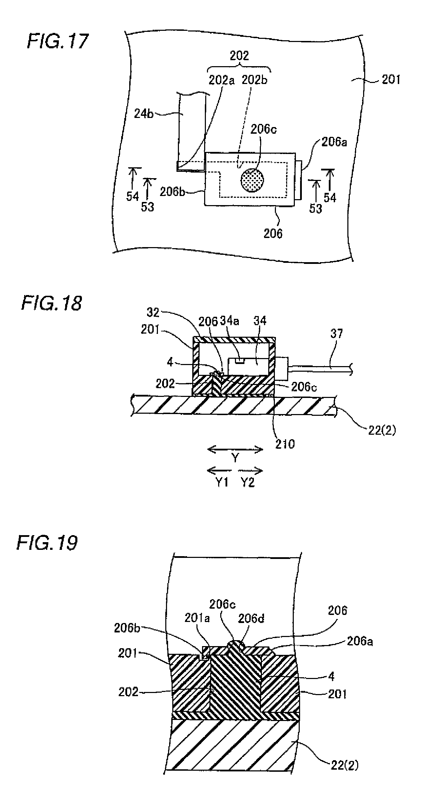

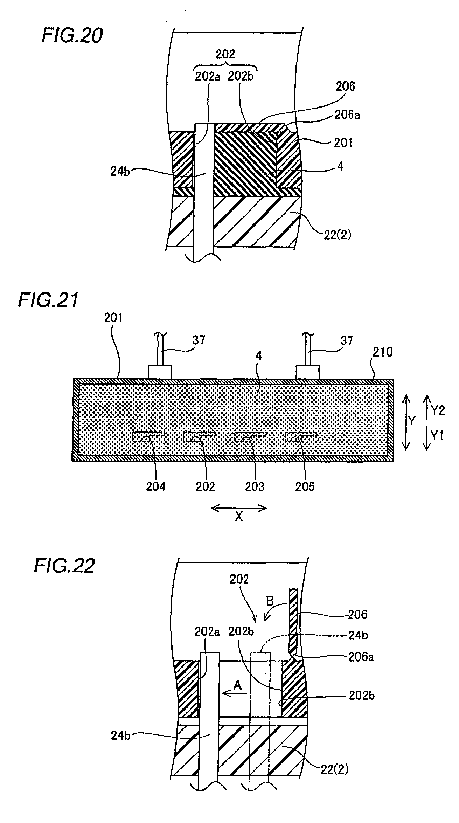

In the solar cell module according to the second embodiment, the terminal box 200 is adhered to a solar cell panel 2 through the adhesive 4 (see Figs. 17 to 21) to be fixed, as shown in Fig. 15. The terminal box 200 includes a box-shaped body portion 201 made of resin and a lid member 32 made of resin. As shown in Figs. 16 and 21, four openings 202, 203, 204 and 205 conducting the outer portion (side of the solar cell panel 2) and the inner portion (side of terminal blocks 33 to 36) of the body portion 201 are formed on the lower surface of the body portion 201. The body portion 201 is an example of the "box body portion" in the present invention.

As shown in Fig. 17, the opening 202 has a slit portion 202a, whose width is narrow, having a width substantially identical to the thickness of a connecting member 24b and a connecting member insertional portion 202b whose width is large. The openings 203 to 205 also have slit portions and connecting member insertional portions respectively. As shown in Fig. 16, connecting members 24b, 24c, 24e and 24f are introduced into the inner portion from outside the body portion 201 through the slit portions of the openings 202 to 205 respectively. The connecting member insertional portions are provided for easily inserting the connecting members 24b, 24c, 24e and 24f into the openings 202 to 205 when manufacturing the solar cell module according to the second embodiment, as described later. The connecting member insertional portions and the slit portions are examples of the "first opening portion" and the "second opening portion" in the present invention.

As shown in Figs. 17 to 20, an upper open end of the opening 202 is covered with a lid portion 206. The lid portion 206 has a hinge portion 206a provided on one side with respect to the opening 202 and a hook portion 206b (see Fig. 19) provided on another side with respect to the opening 202. The lid portion 206 including the hinge portion 206a and the hook portion 206b is integrally molded with the body portion 201. An engaging portion 201a is formed on a position of the upper surface of the body portion 201 corresponding to the hook portion 206b. The hook portion 206b and the engaging portion 201a so engage with each other that the lid portion 206 is fixed in the state of covering the opening 202. As shown in Figs. 17 and 20, the solar cell module is so formed that a clearance between the slit portion 202a, the connecting member 24b and the lid portion 206 is small in a state where the 1id portion 206 is closed.

As shown in Figs. 17 to 19, the adhesive opening 206c circular in plan view is formed in the lid portion 206. The adhesive opening 206c has a neck portion 206d (see Fig. 19) whose width is smaller than both of a lower open end and an upper open end of the adhesive opening 206c, similarly to each adhesive opening 313 (see Fig. 10) of the aforementioned first embodiment. According to the second embodiment, the adhesive opening 206c, whose sectional structure shown in Fig. 10 or 19 is line-symmetrical with respect to a central axis of the adhesive opening 206c, has such a shape that two cones oppositely directed to each other are vertically overlapped with each other.

Lid portions 207, 208 and 209 similar to the lid portion 206 are provided correspondingly to the openings 203 to 205. The lid portions 207 to 209 also have hinge portions, hook portions and adhesive openings similar to those of the lid portion 206 respectively. Engaging portions corresponding to the hook portions of the lid portions 207 to 209 are also formed on the body portion 201.

As shown in Fig. 21, a double-faced adhesive tape 210 is circumferentially adhered to the lower surface of the body portion 201 on peripheral edge portions of the body portion 201. In other words, the double-faced adhesive tape 210 is circumferentially arranged to surround the whole of the adhesive opening 313 in plan view. As shown in Fig. 18, the body portion 201 is adhered to the solar cell panel 2 by the double-faced adhesive tape 210. The double-faced adhesive tape 210 is an example of the "seal portion" in the present invention.

The adhesive 4 (illustrated in a halftone manner in Figs. 17 and 21) is filled into a space constituted of an inner side surface of the seal portion 210, the lower surface of the body portion 201, the openings 202 to 205 and the adhesive openings 206 to 209.

A manufacturing method for the solar cell module according to the second embodiment of the present invention is now described with reference to Figs. 16, 19 and 21 to 23.

According to the second embodiment, the double-faced adhesive tape 210 is first circumferentially stuck to peripheral edge portions of the lower surface of the body portion 201, as shown in Fig, 21. In this state, the surface of a back-side cover 22 and the lower surface of the body portion 201 of the terminal box 200 are arranged to be opposed to each other. Then, the connecting member 24b is inserted into the opening 202 formed in the lower surface of the body portion 201, as shown in Fig. 16. At this time, the connecting member 24b is first inserted into the connecting member insertional portion 202b whose opening area is large, and the connecting member 24b is thereafter slid in a direction of arrow A and moved toward the slit portion 202a, as shown in Fig. 22. Thus, the connecting member 24b can be easily arranged on the slit portion 202a. Thereafter the lid portion 206 is rotated on the hinge portion 206a in a direction of arrow 8, to engage the hook portion 202b and the engaging portion 201a with each other as shown in Fig. 19. Thus, the lid portion 206 is fixed in the state where the opening 202 is covered with the lid portion 206. Also as to the connecting members 24c, 24e and 24f, similar operations are performed with respect to the openings 203 to 205. Thereafter the lower surface of the body portion 201 and the solar cell panel 2 are pushed against each other, thereby temporarily fixing the terminal box 200 and the solar cell panel 2 to each other by the adhesive force of the double-faced adhesive tape 210.

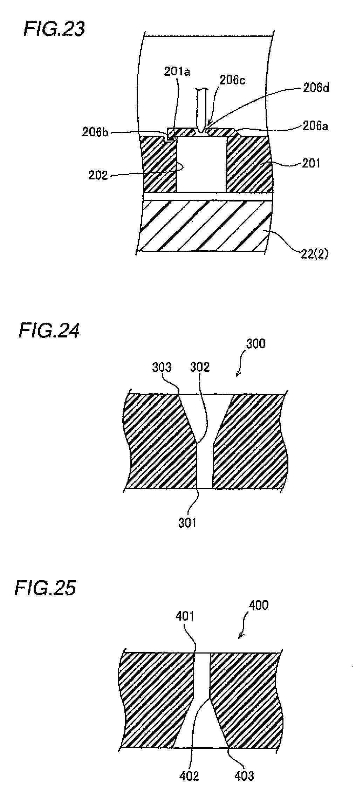

Thereafter the adhesive 4 is injected from the respective adhesive openings (adhesive opening 206c) of the four lid portions 206 to 209, as shown in Fig. 23. Thus, the adhesive 4 enters a space (region illustrated in a halftone manner in Fig. 21) constituted of the solar cell panel 2, the inner side surface of the double-faced adhesive tape 210, the lower surface of the body portion 201, the openings 202 to 205 and a lower portion (portion below the neck portion 206d) of each adhesive opening (adhesive opening 206c). When the adhesive 4 is filled into this space, the adhesive 4 projects to an upper-side portion (portion above the neck portion 206d) of any adhesive opening, whereby an operator can visually recognize that the adhesive 4 has been filled into the aforementioned space while performing the injecting operation from the upper side.

Thereafter the respective ones of terminals 33a to 36a of the terminal blocks 33 to 36 of the terminal box 200 and forward end portions of the connecting members 24b, 24c, 24e and 24f introduced into the terminal box 200 are electrically connected with each other by soldering. After the lid member 32 is mounted on the body portion 201, the adhesive 4 is hardened by leaving the same for a prescribed period. Thus, the terminal box 200 and the solar cell panel 2 are fixed to each other, and the solar cell module according to the second embodiment is completed.

According to the second embodiment, as hereinabove described, the lid portions 206, 207, 208 and 209 covering the openings 202 to 205 for introducing the connecting members 24b, 24c, 24e and 24f connected to solar cells 23 of the solar cell panel 2 into the terminal box 200 are provided on the terminal box 200, while the adhesive openings (adhesive opening 206c etc.) are provided to pass through the lid portions 206, 207, 208 and 209 from the upper surfaces to the lower surfaces. The solar cell module is so provided in this manner that the openings 202 to 205 can be covered with the lid portions 206, 207, 208 and 209 after introducing the connecting members 24b, 24c, 24e and 24f into the terminal box 200 through the openings 202 to 205 also when the sizes (opening areas) of the openings 202 to 205 are large. Thus, the terminal box 200 (the body portion 201 and the lid portions 206, 207, 208 and 209) and the solar cell panel 2 can be adhered to each other in a state where the opening areas are small. Thus, adhered areas of the terminal box 200 and the solar cell panel 2 can be increased, whereby reduction of adhesive strength between the terminal box 200 and the solar cell panel 2 can be suppressed. Further, these lid portions 206, 207, 208 and 209 are so provided with the adhesive openings that reduction of the adhesive strength between the terminal box 200 and the solar cell panel 2 can be more suppressed.

According to the second embodiment, as hereinabove described, the lid portions 206, 207, 208 and 209 are so integrally molded with the terminal box 200 that reduction in the adhesive strength between the terminal box 200 and the solar cell panel 2 can be suppressed by providing the lid portions 206, 207, 208 and 209 without increasing the number of components.

According to the second embodiment, as hereinabove described, the adhesive opening 313 is so circularly formed in plan view that an adhesive nozzle can be easily inserted into the adhesive opening 206c when injecting the adhesive 4 with an adhesive nozzle 60 having a circular (conical) forward end portion, whereby workability can be improved.

According to the second embodiment, as hereinabove described, a plurality of adhesive openings 206c are so provided that the adhesive 4 can be injected from a plurality of portions, whereby the adhesive 4 can be reliably filled into the space between the solar cell panel 2 and the terminal box 3 as compared with a case of injecting the adhesive 4 from one portion.

According to the second embodiment, as hereinabove described, the opening 202 including the connecting member insertional portion for inserting the connecting member 24b into the terminal box 3 and the slit portion, having a width substantially equal to the thickness of the connecting member 24b, formed continuously to the connecting member insertional portion is provided, and the connecting member insertional portion is covered with the lid portion 206. Thus, the connecting member 24b can be easily introduced into the terminal box 3 through the connecting member insertional portion, while the connecting member 24b can be easily arranged on the slit portion having a small clearance by slidingly moving the connecting member 24b from the connecting member insertional portion to the slit portion. Further, the connecting member insertional portion is so covered with the lid portion 206 after arranging the connecting member 24b on the slit portion that the adhesive can be inhibited from flowing into the terminal box 3 from the connecting member insertional portion in injection of the adhesive 4, whereby the adhesive can be reliably filled into the space between the solar cell panel 2 and the terminal box 3 when injecting the adhesive 4 from the adhesive opening of the lid portion 206.

The remaining effects of the second embodiment are similar to those of the aforementioned first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the example of providing the adhesive openings 313 on the flange portion 312 circumferentially protruding outward from the box portion 311 has been shown in the aforementioned first embodiment, the present invention is not restricted to this, but adhesive openings may be provided on a protrusion not having a flange shape.

While the example of arranging the adhesive openings 313 to extend in the directions along the peripheral edge portions of the box portion 311 has been shown in the aforementioned first embodiment, the present invention is not restricted to this, but directions where adhesive openings extend, lengths, shapes etc. may be properly selected. For example, a plurality of dotlike adhesive openings may be provided at prescribed intervals.

While the example of rendering the width W3 of the neck portion 313c smaller than both of the width W1 of the lower open end 313a of each adhesive opening 313 and the width W2 of the upper open end 313b has been shown in the aforementioned first embodiment, the present invention is not restricted to this. For example, the width of a lower open end 301 and the width of a neck portion 302 may be equalized with each other, and the width of an upper open end 303 may be rendered larger than the width of the neck portion 302, as in an adhesive opening 300 according to a first modification shown in Fig. 24. Further, the width of an upper open end 401 and the width of a neck portion 402 may be equalized with each other, and the width of a lower open end 403 may be rendered larger than the width of the neck portion 402, as in an adhesive opening 400 according to a second modification shown in Fig. 25.

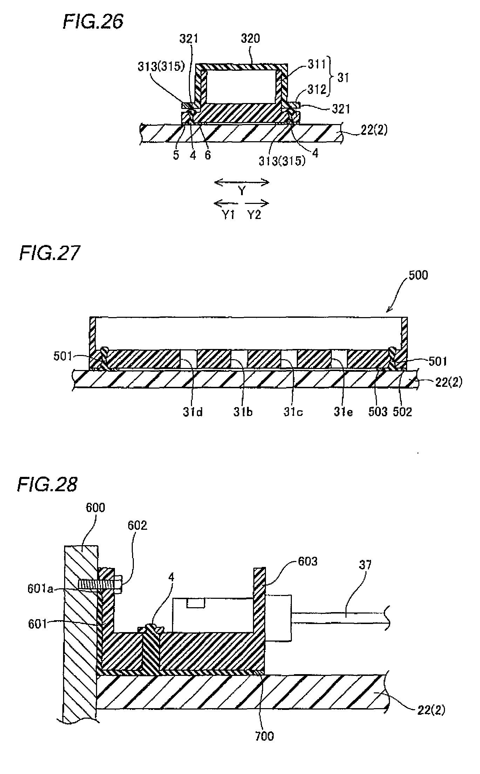

While such an example that the adhesive 4 projecting upward from the adhesive openings 313 is exposed has been shown in the aforementioned first embodiment, the present invention is not restricted to this, but a lid member 320 provided with a roof portion 321 covering the upper surface of a flange portion 312 may be employed, as in a third modification shown in Fig. 26. In this case, an adhesive 4 projecting upward from an adhesive opening 313 can be concealed by the roof portion 321 of the lid member 320, whereby a fine appearance of a solar cell module is not damaged. Therefore, the adhesive 4 projecting upward from the adhesive opening 313 may not be removed, whereby the number of manufacturing steps can be reduced.

While the example of providing the adhesive openings 313 on the flange portion 312 provided outside the box portion 311 has been shown in the aforementioned first embodiment, the present invention is not restricted to this, but adhesive openings 501 may be provided in a terminal box 500 (box portion) without providing a flange portion, as in a fourth modification shown in Fig. 27. In the example shown in Fig. 27, double-faced adhesive tapes 502 and 503 as seal portions are respectively circumferentially provided on the lower surface of the terminal box 500 to hold the adhesive openings 501 therebetween.

While the example of temporarily fixing the terminal box 3 and the solar cell panel 2 to each other with the double-faced adhesive tapes 5 and 6 when adhering the terminal box 3 and the solar cell panel 2 to each other has been shown in the aforementioned first embodiment, the present invention is not restricted to this, but the temporal fixation may not be performed. In a case of performing the temporal fixation, the temporal fixation may be performed with sticky members other than the double-faced adhesive tapes. Further, the temporal fixation may be performed without employing sticky members. For example, the terminal box and the metal frame body may be fixed to each other by screwing or the like, or the terminal box and the metal frame body may be provided with engaging structures to he temporarily fixed to each other. In the case of temporarily fixing the terminal box and the metal frame body to each other by screwing, an inclination 601a is preferably provided on a side surface 601 screwed to a metal frame body 600, as in a modification of the second embodiment shown in Fig. 28. This inclination 601a is so provided that the lower surface of a terminal box 603 is pressed against the side of a solar cell panel 2 when a screw 602 is tightened, whereby adhesive force between the terminal box 603 and the solar cell panel 2 can be more increased.

In a case of performing the temporal fixation by screwing or the like without employing sticky members such as the double-faced adhesive tapes, a single-faced adhesive tape 700 may be stuck to the lower surface of the terminal box 603 as a seal portion, as shown in Fig. 28. Further, a wall surface portion protruding downward from the lower surface of a terminal box may be provided on the terminal box as a seal portion, although not shown. Projection of the adhesive 4 can be suppressed also by the single-faced adhesive tape 700 or the wall surface portion as the seal portion.

While the example of providing the double-faced adhesive tapes 5 and 6 inside and outside the adhesive openings 313 has been shown in the aforementioned first embodiment, the present invention is not restricted this, but only either one of the double-faced adhesive tapes 5 and 6 may be employed.

While the example of employing silicone resin as the adhesive 4 has been shown in the aforementioned first embodiment, the present invention is not restricted this, but the adhesive may be a pasty adhesive having proper viscosity before hardening (when injected into adhesive openings).

The aforementioned modifications are similarly applicable also to the second embodiment.

## Claims

1. A solar cell module comprising:
a solar cell panel (2) including a solar cell; and
a terminal box (3, 200), adhered to said solar cell panel through an adhesive (4), for collecting electricity generated in said solar cell panel, wherein
said terminal box includes an adhesive opening (313, 300, 400, 314, 315, 206c) passing through a box body portion (31, 201),
said adhesive opening has a neck portion (313c, 302, 402, 206d) whose width is smaller than at least either a lower open end (313a, 301, 403) or an upper open end (313b, 303, 401) of said adhesive opening, and
said adhesive is filled into said adhesive opening.

2. The solar cell module according to claim 1, wherein
said neck portion is so formed that the width is smaller than both of said lower open end and said upper open end of said adhesive opening.

3. The solar cell module according to claim 2, so formed that the width gradually reduces from said lower open end and said upper open end of said adhesive opening up to said neck portion.

4. The solar cell module according to claim 1, wherein
said adhesive opening is circularly formed in plan view.

5. The solar cell module according to claim 1, wherein
a plurality of said adhesive openings are provided.

6. The solar cell module according to claim 1, wherein
said adhesive is filled up to an upper side of said neck portion from the side of said adhesive opening closer to said solar cell panel beyond said neck portion.

7. The solar cell module according to claim 1, wherein
said terminal box includes an opening (31b, 31c, 31d, 31e) formed in said terminal box for introducing a connecting member (24b, 24c, 24e, 24f) connected to the solar cell of said solar cell panel into said terminal box and a lid portion (206, 207, 208, 209) covering said opening, and
said adhesive opening is provided to pass through said lid portion.

8. The solar cell module according to claim 7, wherein
said opening includes a first opening portion (202b) for inserting said connecting member into said terminal box and a second opening portion (202a), having a width substantially equal to the thickness of said connecting member, formed continuously to said first opening portion, and
said lid portion is formed to cover said first opening portion.

9. The solar cell module according to claim 7, wherein
said lid portion is integrally molded with said terminal box.

10. The solar cell module according to claim 1, wherein
a seal portion (5, 210) is provided on the lower surface of said box body portion to surround said adhesive opening in plan view.

11. The solar cell module according to claim 10, wherein
said seal portion includes a double-faced adhesive tape.

12. The solar cell module according to claim 1, wherein
said box body portion includes a flange portion (312), and
said adhesive opening (313) is formed on said flange portion.

13. A method for manufacturing a solar cell module, comprising the steps of:
preparing a solar cell panel (2) including a solar cell;
preparing a terminal box (3, 200), including an adhesive opening (313, 300, 400, 314, 315, 206c) passing through a box body portion (31, 201) and having a neck portion (313c, 302, 402, 206d) whose width is smaller than at least either a lower open end (313a, 301, 403) or an upper open end (313b, 303, 401), for collecting electricity generated in said solar cell panel; and
adhering said solar cell panel and said terminal box to each other with an adhesive by injecting and filling said adhesive into said adhesive opening from the upper open end of said adhesive opening in a state of bringing the side of the lower surface of said terminal box into contact with the surface of said solar cell panel.

14. The method for manufacturing a solar cell module according to claim 13, wherein
the step of preparing said terminal box includes a step of forming said neck portion so that the width is smaller than both of said lower open end and said upper open end of said adhesive opening.

15. The solar cell module according to claim 13, wherein
the step of adhering said solar cell panel and said terminal box to each other with said adhesive includes a step of adhering said solar cell panel and said terminal box to each other with said adhesive by filling said adhesive up to an upper side of said neck portion from the side of said adhesive opening closer to said solar cell panel beyond said neck portion.

16. The method for manufacturing a solar cell module according to claim 13, wherein
the step of preparing said terminal box includes the steps of:
forming an opening (31b, 31c, 31d, 31e) for introducing a connecting member (24b, 24c, 24e, 24f) connected to the solar cell of said solar cell panel into said terminal box and a lid portion (206, 207, 208, 209) covering said opening on said terminal box, and
providing said adhesive opening (206c) to pass through said lid portion.

17. The method for manufacturing a solar cell module according to claim 16, wherein
the step of forming said opening includes a step of forming a first opening portion (202b) for inserting said connecting member into said terminal box and a second opening portion (202a), having a width substantially equal to the thickness of said connecting member, formed continuously to said first opening portion, and
the step of forming said lid portion includes a step of forming the lid portion capable of covering said first opening.

18. The method for manufacturing a solar cell module according to claim 17, further comprising the steps of:
inserting said connecting member into said terminal box through said first opening portion, and
covering said first opening portion with said lid portion after moving said connecting member from said first opening portion to said second opening portion, wherein
the step of adhering said solar cell panel and said terminal box to each other with said adhesive includes a step of adhering said solar cell panel and said terminal box to each other with said adhesive by injecting said adhesive through an adhesive opening of said lid portion.

19. The method for manufacturing a solar cell module according to claim 13, further comprising the step of providing a seal portion (5, 210) on the lower surface of said box body portion to surround said adhesive opening in plan view in advance of the step of adhering said solar cell panel and said terminal box to each other with said adhesive.

20. The method for manufacturing a solar cell module according to claim 19, wherein
the step of providing said seal portion includes a step of sticking a double-faced adhesive tape to the lower surface of said box body portion.
